# EUROPEAN PATENT APPLICATION

(11) **EP 1 895 256 A1**
(43) Date of publication of application: **05.03.2008**
(21) Application number: 06745832.3
(22) Date of filing: 28.04.2006
(51) Int. Cl.: F28D 7/02, F25B 39/00, B23K 1/00

(54) **HEAT EXCHANGER**

(30) Priority: 16.05.2005 JP 2005142432
(71) Applicant: DAIKIN INDUSTRIES, LTD., Osaka-shi, Osaka 530-8323 (JP)
(72) Inventor: NUMATA, Mitsuharu Kanaoka Factory, Sakai Plant, Sa-ku Sakai-shi, Osaka 5918511 (JP); SHIBATA, Yutaka Kanaoka Factory, Sakai Plant, Kita-ku, Sa kai-shi, Osaka 5918511 (JP)
(74) Representative: HOFFMANN EITLE
(86) International application number: PCT/JP2006/308973
(87) International publication number: WO 2006/123535

(57) **Abstract**

The outer surface of a core pipe 31 is pressed so as to form projections 313 on the inner surface of the core pipe 31, and a winding pipe 32 is helically wound around the outer circumference of the core pipe 31. Subsequently, the core pipe 31 and the winding pipe 32 are bent together, and brazing is performed. As a result, the outer surface of the winding pipe 32 is in contact with the outer surface of the core pipe 31 without any gap therebetween at a bending center portion (D), and the outer surface of the winding pipe (32) is bonded to the outer surface of the core pipe (31) by a brazing material (33) at the bending center portion (D) of the bent part C-C.

## Description

### TECHNICAL FIELD

The present invention relates to a heat exchanger. More specifically, the present invention relates to a heat exchanger comprising a core pipe having projections that are formed on the inner surface thereof by pressing the outer surface of the core pipe, and a winding pipe that is wound around the outer surface of the core pipe.

### BACKGROUND ART

Some heat exchangers used for air conditioners, water heaters, and the like are provided with a core pipe that forms a passage of a first fluid, a winding pipe that is wound around the outer surface of the core pipe and forms a passage of a second fluid, and a heat exchanger that exchanges heat between the first fluid and the second fluid. For example, a double pipe heat exchanger is used as a heat exchanger for a water heater such as a heat pump water heater. Such a heat exchanger is formed by two pipes: a core pipe through which water flows and a winding pipe through which the refrigerant flows. These two pipes are spirally wound into an oval shape and used as one heat exchanger unit, and a main body of the heat exchanger is formed by mutually superposing and connecting a number of such heat exchanger units to each other. For forming a main body of a heat exchanger, a technology has been proposed in which a heat exchanger is formed by spirally winding a winding pipe around the outer circumference of a jig that corresponds to a core pipe, pulling out the jig so as to form a winding pipe body, and inserting a core pipe into the winding pipe body. In addition, another technology has been proposed to improve the heat transfer performance of a core pipe used in a heat exchanger. With this technology, projections are provided on the inner surface of the core pipe by pressing the outer surface of the core pipe so as to improve the heat transfer performance (Patent Document 1).
Patent Document 1
   JP-A Publication No. H06-70556

### DISCLOSURE OF THE INVENTION

### <Problem the Invention is to Solve>

However, when a heat exchanger is formed by spirally winding a winding pipe around the outer circumference of a jig, pulling out the jig so as to form a winding pipe body, and inserting a core pipe into the winding pipe body, there is a risk that a poor contact may be formed between the core pipe and the winding pipe, consequently reducing the heat transfer performance. In particular, when a core pipe having projections that are formed on the inner surface thereof by pressing the outer surface of the core pipe is used as a core pipe of a heat exchanger, since a cross-section at a bent part of such a core pipe has an irregular shape because of the projections, there is a risk that a poor contact may be formed between the core pipe and the winding pipe, consequently reducing the heat transfer performance.

Therefore, an object of the present invention is to overcome the above problem and to improve the heat transfer performance of a heat exchanger comprising a core pipe having projections that are formed on the inner surface thereof by pressing the outer surface of the core pipe, and a winding pipe that is wound around the outer surface of the core pipe. The present invention also aims to provide a method for manufacturing a heat exchanger that has a good heat transfer performance.

### <Means to Solve the Problem>

A heat exchanger according to a first aspect of the present invention comprises a core pipe having projections that are formed on the inner surface thereof by pressing the outer surface of the core pipe and a winding pipe that is wound around the outer surface of the core pipe, wherein the core pipe has a linear part and a bent part; the outer surface of the winding pipe is in contact with the outer surface of the core pipe without any gap therebetween at a bending center portion of the bent part; and the outer surface of the winding pipe is bonded to the outer surface of the core pipe by a brazing material at the bending center portion of the bent part.

Here, the core pipe of the heat exchanger has projections that are formed on the inner surface of the core pipe. Accordingly, the heat transfer coefficient is improved because of the projections provided inside the pipe, which consequently improves the overall performance of the heat exchanger. On the other hand, when the winding pipe is wound around the core pipe and then the core pipe is spirally wound into an oval shape, since a cross-section at the bent part of the core pipe has an irregular shape because of the projections, there is a risk that a poor contact may be formed between the core pipe and the winding pipe, consequently reducing the heat transfer performance. However, with the heat exchanger of the present invention, the outer surface of the winding pipe is in contact with the outer surface of the core pipe without any gap therebetween at the bending center portion of the bent part, and also, the outer surface of the winding pipe is bonded to the outer surface of the core pipe by the brazing material at the bending center portion of the bent part. Therefore, a poor contact between the core pipe and the winding pipe will not be formed at least at the bending center portion of the bent part, which consequently improves the heat transfer performance.

A method for manufacturing a heat exchanger according to a second aspect of the present invention is a method for manufacturing a heat exchanger having a core pipe and a winding pipe, the method comprising: pressing the outer surface of the core pipe so as to form projections on the inner surface; winding the winding pipe around the outer surface of the core pipe; bending the core pipe with the winding pipe being wound around the outer surface of the core pipe; and brazing the outer surface of the winding pipe to the outer surface of the core pipe by a brazing material.

When a part provided with the projections is bent, since a cross-section at the bent part of the core pipe has an irregular shape because of the projections, there is usually a risk that a poor contact may' be formed between the core pipe and the winding pipe, consequently reducing the heat transfer performance. However, with the present invention, the outer surface of the core pipe is pressed so as to form the projections on the inner surface, and the winding pipe is wound around the outer surface of the core pipe, and then, with the winding pipe being wound around the outer surface of the core pipe, the core pipe and the winding pipe are bent together using a jig or like in order to bend the core pipe. Such a method allows the outer surface of the winding pipe to be in contact with the outer surface of the core pipe without any gap therebetween at least at the bending center portion of the bent part that comes into contact with a jig. Therefore, at least at the bending center portion of the bent part, a poor contact between the core pipe and the winding pipe will not be formed, which consequently improves the heat transfer performance.

In addition, when a part provided with the projections is bent, a large deformation and breakage may occur at a concave portion on the outer surface of the core pipe during the bending process. Therefore, conventionally, the bent part is not provided with the projections, and thus improvement of the heat transfer performance by means of the projections has not been achieved at the bent part. However, when the core pipe and the winding pipe are bent together with the winding pipe being wound around the outer surface of the core pipe, the overall strength increases so that it is possible to prevent a large deformation and breakage at a concave portion on the outer surface of the core pipe during the bending process, even if the bent part is provided with the projections.

Further, it is possible to improve the heat transfer performance by brazing the outer surface of the winding pipe to the outer surface of the core pipe by the brazing material in order to bond the core pipe to the winding pipe in the brazing process.

A heat exchanger according to a third aspect of the present invention is the heat exchanger according to the first aspect of the present invention, the heat exchanger comprising the core pipe having the projections that are formed on the inner surface thereof by pressing the outer surface of the core pipe, the winding pipe that is wound around the outer surface of the core pipe, and the brazing material by which the outer surface of the winding pipe is brazed to the outer surface of the core pipe, wherein the core pipe includes a bent part that is formed by bending the core pipe with the winding pipe being wound around the outer surface of the core pipe.

In this aspect of the invention, the core pipe has a linear part and a bent part. In addition, the bent part is formed by bending the core pipe with the winding pipe being wound around the outer surface of the core pipe, so that it is possible to wind the winding pipe such that the outer surface of the winding pipe comes into contact with the outer surface of the core pipe without any gap therebetween at the bending center portion of the bent part.

### <Effect of the Invention>

As described above, the following effects can be obtained according to the present invention.

The heat exchanger according to the first aspect of the present invention is provided with the projections on the inner surface of the core pipe of the heat exchanger. Accordingly, the heat transfer coefficient will improve because of the projections provided inside the pipe, and the overall performance of the heat exchanger will consequently improve. In addition, when the winding pipe is wound around the core pipe and then the core pipe is spirally wound into an oval shape, since a cross-section at the bent part of the core pipe has an irregular shape because of the projections, there is a risk that a poor contact may be formed between the core pipe and the winding pipe, consequently reducing the heat transfer performance. However, with the heat exchanger of the present invention, the winding pipe is wound such that the outer surface of the winding pipe comes into contact with the outer surface of the core pipe without any gap therebetween at the bending center portion of the bent part, and also, the outer surface of the winding pipe is bonded to the outer surface of the core pipe by the brazing material at the bending center portion of the bent part. Therefore, a poor contact between the core pipe and the winding pipe will not be formed at least at the bending center portion of the bent part, which consequently improves the heat transfer performance.

The method for manufacturing a heat exchanger according to the second aspect of the present invention comprises: pressing the outer surface of the core pipe so as to form the projections on the inner surface; winding the winding pipe around the outer surface of the core pipe; and, with the winding pipe being wound around the outer surface of the core pipe, bending the core pipe and the winding pipe together using a jig or like in order to bend the core pipe. Such a method allows the outer surface of the winding pipe to be in contact with the outer surface of the core pipe without any gap therebetween at least at the bending center portion of the bent part that comes into contact with a jig in the bending process. Therefore, at least at the bending center portion of the bent part, a poor contact between the core pipe and the winding pipe will not be formed, which consequently improves the heat transfer performance.

In addition, when a part provided with the projections is bent, a large deformation and breakage may occur at a concave portion on the outer surface of the core pipe during the bending process. Therefore, conventionally, the bent part is not provided with the projections, and thus improvement of the heat transfer performance by means of the projections has not been achieved at the bent part. However, when the core pipe and the winding pipe are bent together with the winding pipe being wound around the outer surface of the core pipe, the overall strength increases so that it is possible to prevent a large deformation and breakage at a concave portion on the outer surface of the core pipe during the bending process, even if the bent part is provided with the projections.

Further, it is possible to improve the heat transfer performance by brazing the outer surface of the winding pipe to the outer surface of the core pipe by the brazing material in order to bond the core pipe to the winding pipe in the brazing process.

The heat exchanger according to the third aspect of the present invention enables improvement of the heat transfer performance since a poor contact between the core pipe and the winding pipe will not be formed at least at the bending center portion of the bent part. In addition, when the core pipe and the winding pipe are bent together with the winding pipe being wound around the outer surface of the core pipe, the overall strength increases so that it is possible to prevent a large deformation and breakage at a concave portion on the outer surface of the core pipe during the bending process, even if the bent part is provided with the projections.

### BRIEF DESCRIPTION OF THE DRAWINGS

Figure 1 is a schematic diagram of a heat pump water heater.
Figure 2 is a schematic diagram of a water heat exchanger.
Figure 3 is a plan view of a core pipe.
Figure 4(a) is a partially enlarged view of the heat exchanger including a bent part.
Figure 4(b) is a cross sectional view of the bent part C-C.
Figure 5(a) illustrates a process of forming projections that are spirally arranged around the core pipe.
Figure 5(b) illustrates a process of forming projections that are vertically symmetrical with respect to the core pipe.
Figure 6 illustrates a process of forming a bent part of the core pipe.
Figure 7(a) illustrates a process of applying a brazing material in a paste form.
Figure 7(b) illustrates a process of brazing the heat exchanger.

### DESCRIPTION OF THE REFERENCE SYMBOLS

- 1: hot water supply unit
- 100: heat pump water heater
- 2: heat pump unit
- 30: water heat exchanger
- 31: core pipe
- 311: water inlet
- 312: water outlet
- 313, 413: projections
- 32: winding pipe
- 33: brazing material
- 50, 60, 70: bending jig
- 100: projection forming jig

### BEST MODE FOR CARRYING OUT THE INVENTION

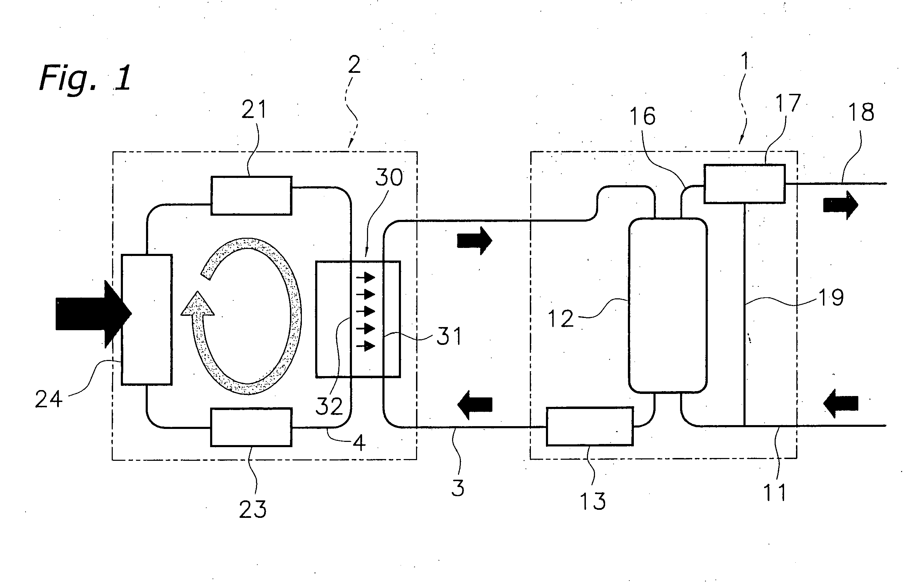

The heat exchanger according to the present invention will now be described based on the attached drawings and the embodiments. Figure 1 is a schematic diagram of a heat pump water heater in which a heat exchanger of the present invention is employed. In the heat pump water heater shown in Figure 1, water is heated in a single pass from about 10°C to about 90°C over a long time of period in order to efficiently use low-cost nighttime electric power. Here, the heat pump water heater comprises a hot water supply unit 1, and a heat pump unit 2. The following are successively coupled in the hot water supply unit 1: a service water pipe 11, a hot water storage tank 12, a water circulation pump 13, a water supply pipe 3, a core pipe 31 that constitutes a water heat exchanger 30, a hot water pipe 16, a mixing valve 17, and a hot water supply pipe 18. Here, service water is supplied from the water supply pipe 11 to the hot water storage tank 12. Low temperature water is supplied by the water circulation pump 13 from the bottom part of the hot water storage tank 12 to the core pipe 31 of the water heat exchanger 30, and heated. The heated hot water flows into the upper part of the hot water storage tank 12. The high temperature hot water that exits from the upper part of the hot water storage tank 12 via the hot water pipe 16 is mixed with the cold water of a mixed water pipe 19 by the mixing valve 17. This mixing valve 17 regulates the temperature of the supplied hot water, which is supplied to the user by the hot water supply pipe 18.

Next, the heat pump unit 2 is provided with a refrigerant circulating circuit that comprises a compressor 21, the water heat exchanger 30, an expansion valve 23, and an air heat exchanger 24, which are connected sequentially by a winding pipe 32. The refrigerant is compressed to a high pressure by the compressor 21, and is then sent to the water heat exchanger 30. The refrigerant whose heat was exchanged in the water heat exchanger 30 passes through the expansion valve 23, and is supplied to the air heat exchanger 24. The refrigerant absorbs heat from the surroundings, and then circulates back to the compressor 21.

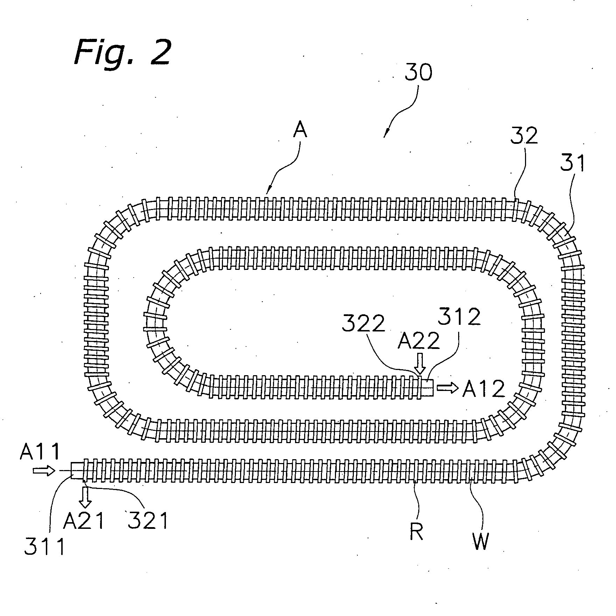

Figure 2 is a schematic diagram of the water heat exchanger 30 in the heat pump water heater. As shown in Figure 2, the water heat exchanger 30 comprises the core pipe 31 and the winding pipe 32. The core pipe 31 has a linear part A and a bent part B in the same plane. The core pipe 31 is spirally formed into an oval shape and forms a water passage W. The winding pipe 32 is helically wound around the outer circumference of the core 31, and forms a refrigerant passage R. Further, the outer circumferential side of the spiral of the core pipe 31 is a water inlet 311, and the center side of the spiral of the heat transfer pipe 31 is a water outlet 312. In the water heat exchanger 30, the refrigerant inside the winding pipe 32 flows into the refrigerant inlet 322 from the A22 direction, and radiates heat. Subsequently, the refrigerant flows out of the refrigerant outlet 321 in the A21 direction. The service water supplied into the water inlet 311 from the A11 direction is heated by this heat, turns into hot water, and flows out of the water outlet 312 in the A12 direction.

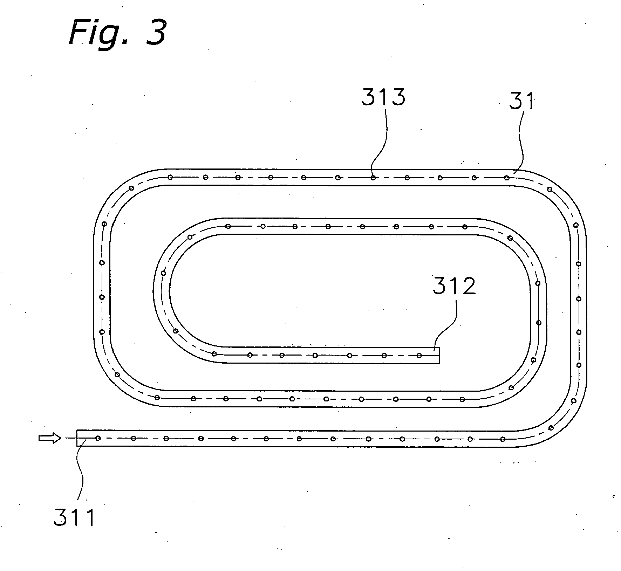

Next the core pipe 31 is described. As shown in Figure 3, this embodiment uses the core pipe 31 having an inside diameter D of 8 mm in which projections each having a height H1 of 1 mm are provided vertically symmetric at a 20 mm pitch in the pipe axial direction on the pipe inner surface. Figure 3 illustrates only projections 313 provided upward when viewed from the paper surface direction. In addition, flat surface parts 31 a that are not provided with the projections exist on the inner surface of the core pipe 31. Accordingly, the heat transfer coefficient is improved because of the projections 313 provided inside the pipe, which consequently improves the overall performance of the heat exchanger. In addition, the core pipe 31, which is spirally formed into an oval shape in the same plane and forms the water passage W, has the bend radius R of 40 mm. Here, it is preferable that the bend radius R of the core pipe 31 is three to five times the outside diameter of the core pipe 31.

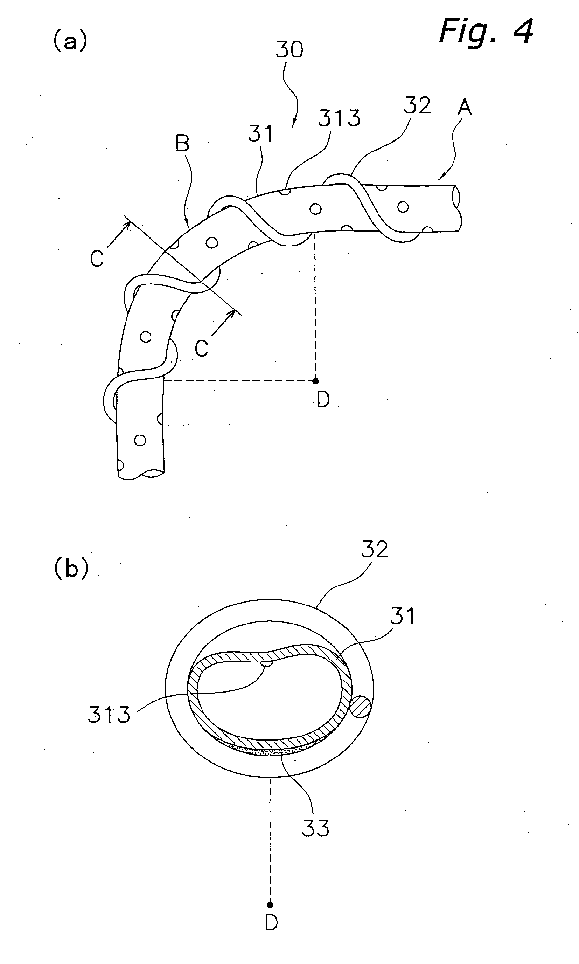

Figure 4(a) is a partially enlarged view of the water heat exchanger 30 including the bent part B in the heat pump water heater, and Figure 4(b) is a cross sectional view of the bent part C-C. In this embodiment, the outer surface of the core pipe 31 having the inside diameter D of 8 mm is inwardly pressed so as to dent the outer surface, thereby the projections each having a height H1 of 1 mm are provided at a 20 mm pitch in the pipe axial direction on the inner surface of the core pipe 31. In other words, dents are formed on the outer surface of the core pipe 31 at the parts where the projections are formed on the inner surface of the core pipe 31. In addition, as shown in the cross sectional view of Figure 4(b), when the winding pipe 32 is helically wound around the outer surface of the core pipe 31 and then the core pipe 31 and the winding pipe 32 are bent together, the outer surface of the winding pipe 32 is in contact with the outer surface of the core pipe 31 without any gap therebetween at the bending center portion (D) of the bent part, and the outer surface of the winding pipe (32) is bonded to the outer surface of the core pipe (31) by a brazing material (33) at the bending center portion (D) of the bent part C-C. On the other hand, a gap is formed between the outer surface of the winding pipe 32 and the outer surface of the core pipe 31 on the outer side of the bent part.

### <Manufacturing Process of the Heat Exchanger>

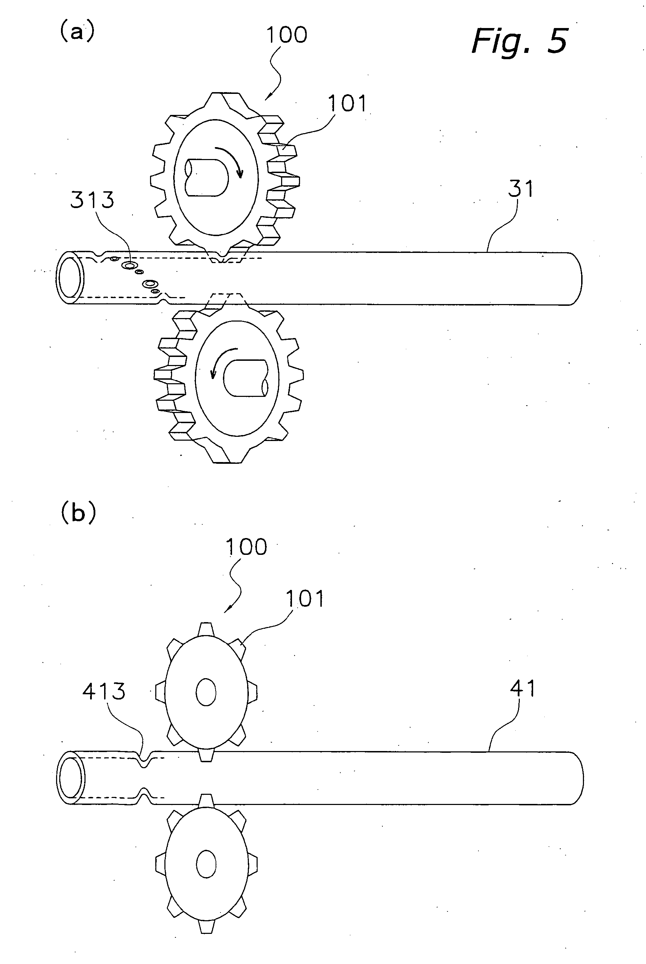

First, the projections 313 are formed on the inner surface of the core pipe 31. Here, as a method for forming the projections, as shown in Figure 5(a), a gear shaped jig 100 is made, and teeth of the gear 100 are pressed against the outer surface of the core pipe 31. Thereby, the projections 313 can be helically formed on the inner surface of the core pipe 31. Note that, as shown in Figure 5(b), projections 413 that are linearly aligned in the pipe axial direction may be formed by a method in which a gear 101 is pressed against the core pipe 31 such that the projections 413 are vertically symmetrical with respect to the pipe axis (a). In addition, methods for forming the projections are not limited to the methods described above.

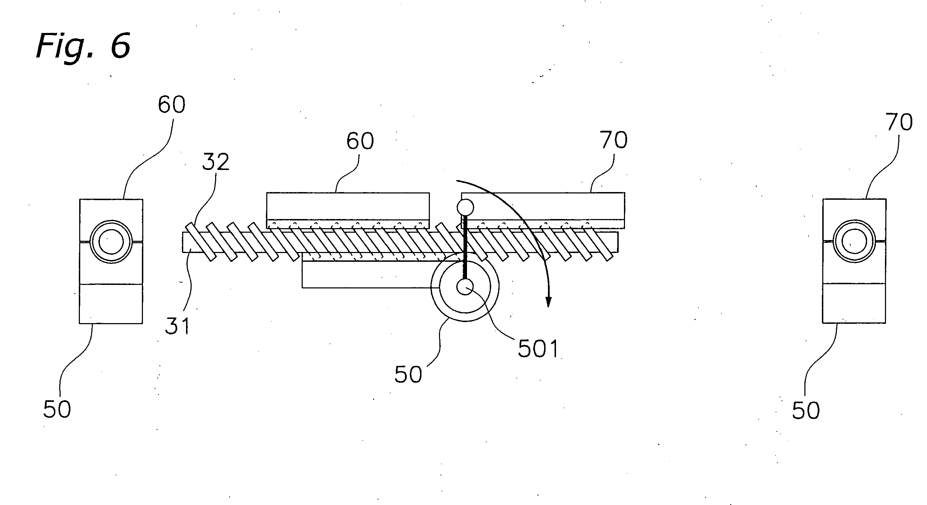

Next, the winding pipe 32 is helically wound around the core pipe 31. Subsequently, with the winding pipe 32 being wound around the outer surface of the core pipe 31, the core pipe 31 and the winding pipe 32 are bent together in order to form a bent part by using a jig such as a pipe bender that is usually commercially available. As shown in Figure 6, in this embodiment, the core pipe has an outside diameter of 9.5 mm and the winding pipe has an outside diameter of 6.2 mm, so that the outside diameter of the core pipe with the winding pipe wound therearound is about 15.7 mm. Accordingly, a bender having an outside diameter of 15.9 mm is used to form the bent part. The jig used in this embodiment comprises fixed jigs 50 and 60 and a movable jig 70. First, with the winding pipe 32 being wound around the outer surface of the core pipe 31, the core pipe 31 is inserted between the fixed jigs 50 and 60, and the jig 70 that is secured onto the core pipe 31 is bent about the center of a circle 501 of the jig 50 in the in the direction of the arrow. Through such work process, the winding pipe 32 and the core pipe 31a are bent along the jig 50 at the center of the circle 501, so that it is possible to wind the winding pipe 32 around the core pipe 31 such that the outer surface of the winding pipe 32 comes into contact with the outer surface of the core pipe 31 without any gap therebetween. In addition, a jig to use is not limited to a pipe bender.

Such a method allows the outer surface of the winding pipe 32 to be in contact with the outer surface of the core pipe 31 without any gap therebetween at least at the bending center portion of the bent part that comes into contact with the jig 50. When a part provided with the projections is bent, since a cross-section at the bent part of the core pipe has an irregular shape because of the projections, there is usually a risk that a poor contact may be formed between the core pipe and the winding pipe, consequently reducing the heat transfer performance. However, with the present invention, first the outer surface of the core pipe 31 is pressed so as to form the projections on the inner surface, and after which the winding pipe 32 is wound around the outer surface of the core pipe 31. Therefore, a poor contact will not be formed between the core pipe 31 and the winding pipe 32 at least at the bending center portion of the bent part, which consequently improves the heat transfer performance.

In addition, when a part provided with the projections is bent, a large deformation and breakage may occur at a concave portion on the outer surface of the core pipe during the bending process. Therefore, conventionally, the bent part is not provided with the projections, and thus improvement of the heat transfer performance by means of the projections has not been achieved at the bent part. However, when the core pipe 31 1 and winding pipe 32 are bent together with the winding pipe 32 being wound around the outer surface of the core pipe 31, the overall strength increases so that it is possible to prevent a large deformation and breakage at a concave portion on the outer surface of the core pipe during the bending process, even if the bent part is provided with the projections.

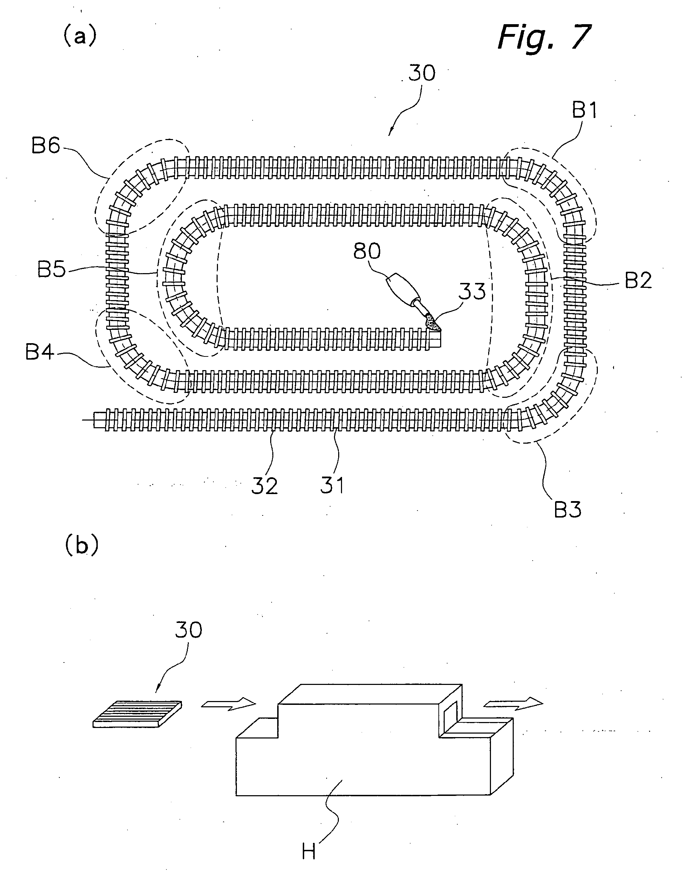

The final process is brazing. First, as shown in Figure 7(a), with the heat exchanger. 30 formed by the core pipe 31 and a plurality of winding pipes 32 that are helically wound around the core pipe 31, the brazing material 33 in a paste form, which is contained in a container 80, is applied onto the winding pipes 32. Subsequently, as shown in Figure 7(b), the heat exchanger 30 is passed through a vacuum furnace or a furnace atmosphere H to be brazed. In this process, the outer surface of the winding pipe 32 is bonded to the outer surface of the core pipe 31 by the brazing material 33. At least at the bending center portion of each of the bent parts B1 to B6, the outer surface of the winding pipe 32 is bonded to the outer surface of the core pipe 31 by the brazing material 33, which consequently improves the heat transfer performance.

## Claims

1. A heat exchanger (30) comprising a core pipe (31) having projections (313, 413) that are formed on the inner surface thereof by pressing the outer surface of the core pipe (31), and a winding pipe (32) that is wound around the outer surface of the core pipe (31), wherein
the core pipe has a linear part (A) and a bent part (B),
the outer surface of the winding pipe (32) is in contact with the outer surface of the core pipe (31) without any gap therebetween at a bending center portion (D) of the bent part (B), and
the outer surface of the winding pipe (32) is bonded to the outer surface of the core pipe (31) by a brazing material (33) at the bending center portion (D) of the bent part (B).

2. A method for manufacturing a heat exchanger (30) including a core pipe (31) and a winding pipe (32), comprising:
pressing the outer surface of the core pipe (31) so as to form projections (313) on the inner surface thereof;
winding the winding pipe (32) around the outer surface of the core pipe (31);
bending the core pipe (31) with the winding pipe (32) being wound around the outer surface of the core pipe (31); and
brazing the outer surface of the winding pipe (32) and the outer surface of the core pipe (31) by a brazing material (33).

3. The heat exchanger (30) according to claim 1, comprising:
a core pipe (31) having projections (313) that are formed on the inner surface thereof by pressing the outer surface of the core pipe (31);
a winding pipe (32) that is wound around the outer surface of the core pipe (31); and
a brazing material (33) that brazes the outer surface of the winding pipe (32) to the outer surface of the core pipe (31),
wherein
the core pipe (31) includes a bent part (B) that is formed by bending the core pipe (31) with the winding pipe (32) being wound around the outer surface of the core pipe (31).
